# EUROPEAN PATENT APPLICATION

(11) **EP 4 525 493 A1**
(43) Date of publication of application: **19.03.2025**
(21) Application number: 23802736.1
(22) Date of filing: 04.05.2023
(51) Int. Cl.: H04W 8/14

(54) **VOICE CALL METHOD AND APPARATUS, AND ELECTRONIC DEVICE**

(30) Priority: 11.05.2022 CN 202210516687
(71) Applicant: Vivo Mobile Communication Co., Ltd., Dongguan, Guangdong 523863 (CN)
(72) Inventor: LIU, Xu, Dongguan, Guangdong 523863 (CN)
(74) Representative: Lavoix
(86) International application number: PCT/CN2023/092086
(87) International publication number: WO 2023/216964

(57) **Abstract**

This application discloses a voice call method and apparatus, and an electronic device, and pertains to the field of communication technologies. The method is applied to a first electronic device, where the first electronic device camps on a SA cell. The method includes: in a case that a first voice call request is received, sending a first session progress message to the SA cell, so that the SA cell returns a PDU session modification command based on the first session progress message; in a case that the PDU session modification command carries first signaling, determining the SA cell as an abnormal cell; and falling back to an LTE cell and making a voice call in the LTE cell based on a received second voice call request.

## Description

### CROSS-REFERENCE TO RELATED APPLICATIONS

This application claims priority to Chinese Patent Application No. 202210516687.9, filed in China on May 11, 2022, which is incorporated herein by reference in its entirety.

### TECHNICAL FIELD

This application pertains to the field of communication technologies, and specifically relates to a voice call method and apparatus, and an electronic device.

### BACKGROUND

5G NR features greater transmission capacity, higher reliability, and lower delay, and as a new generation of digital infrastructure, is becoming a new kinetic energy for economic and social development.

At present, voice service is still one of the main services of major operators. Because call quality of voice services directly affects users' call experience, it is very important to improve call quality between different user terminals in the 5G network. However, at an initial construction stage of a 5G standalone (Standalone, SA) network, the network construction is not fully considered, and performance of some SA cells is not perfect. A call may fail when a user terminal camps on a SA cell, and the call cannot be normally implemented.

### SUMMARY

Embodiments of this application aim to provide a voice call method and apparatus, and an electronic device, so as to resolve the problem of call failure caused when a user terminal camps on an abnormal SA cell.

According to a first aspect, an embodiment of this application provides a voice call method, applied to a first electronic device, where the first electronic device camps on a SA cell, and the method includes:
in a case that a first voice call request is received, sending a first session progress message to the SA cell, so that the SA cell returns a PDU session modification command based on the first session progress message;
in a case that the PDU session modification command carries first signaling, determining the SA cell as an abnormal cell, where the first signaling is used to indicate the first electronic device to delete an unknown QoS flow; and
falling back to an LTE cell and making a voice call in the LTE cell based on a received second voice call request.

According to a second aspect, an embodiment of this application provides a voice call method, applied to a second electronic device, where the second electronic device camps on a SA cell, and the method includes:
in a case that a voice call request is sent through the SA cell, receiving a PDU session modification command returned by the SA cell based on the voice call request;
in a case that the PDU session modification command carries first signaling, determining the SA cell as an abnormal cell, where the first signaling is used to indicate the second electronic device to delete an unknown QoS flow; and
falling back to an LTE cell and making a call retry based on the LTE cell.

According to a third aspect, an embodiment of this application provides a voice call apparatus, applied to a first electronic device, where the first electronic device camps on a SA cell, and the apparatus includes:
a first receiving module, configured to receive a first voice call request;
a first sending module, configured to: send a first session progress message to the SA cell, so that the SA cell returns a PDU session modification command based on the first session progress message;
a first determining module, configured to: in a case that the PDU session modification command carries first signaling, determine the SA cell as an abnormal cell, where the first signaling is used to indicate the first electronic device to delete an unknown QoS flow; and
a call module, configured to fall back to an LTE cell and make a voice call in the LTE cell based on a received second voice call request.

According to a fourth aspect, an embodiment of this application further provides a voice call apparatus, applied to a second electronic device, where the second electronic device camps on a SA cell, and the apparatus includes:
a second sending module, configured to send a voice call request through the SA cell;
a second receiving module, configured to receive a PDU session modification command returned by the SA cell based on the voice call request;
a second determining module, configured to: in a case that the PDU session modification command carries first signaling, determine the SA cell as an abnormal cell, where the first signaling is used to indicate the second electronic device to delete an unknown QoS flow; and
a fallback module, configured to fall back to the LTE cell and make a call retry based on the LTE cell.

According to a fifth aspect, an embodiment of this application provides an electronic device, where the electronic device includes a processor and a memory, and the memory stores a program or instructions capable of running on the processor, and when the program or the instructions are executed by the processor, the steps of the method according to the first aspect or the second aspect are implemented.

According to a sixth aspect, an embodiment of this application provides a readable storage medium, where a program or instructions are stored in the readable storage medium, and when the program or the instructions are executed by a processor, the steps of the method according to the first aspect or the second aspect are implemented.

According to a seventh aspect, an embodiment of this application provides a chip, where the chip includes a processor and a communication interface, the communication interface is coupled to the processor, and the processor is configured to run a program or instructions to implement the method according to the first aspect.

According to an eighth aspect, an embodiment of this application provides a computer program product, where the program product is stored in a storage medium, and the program product is executed by at least one processor to implement the method according to the first aspect or the second aspect.

In the embodiments of this application, the first electronic device sends a session progress message in the camped-on SA cell in a case that a first voice call request is received, so that the SA returns a PDU session modification command correspondingly. In a case that the PDU session modification command carries the first signaling, the first electronic device determines the SA cell as an abnormal cell and falls back to the LTE cell to make a voice call in the LTE cell based on a received second voice call request. That is, the first electronic device can identify a SA cell in which a call cannot be normally made, and fall back to an LTE cell, so that voice call can be made normally for a next incoming call and meet call requirements of users.

### BRIEF DESCRIPTION OF DRAWINGS

FIG. 1 is a flowchart of a voice call method according to an embodiment of this application;
FIG. 2 is a flowchart of a voice call method according to an example of this application;
FIG. 3 is a flowchart of a voice call method according to another example of this application;
FIG. 4 is a flowchart of a voice call method according to another embodiment of this application;
FIG. 5 is a flowchart of a voice call method according to another example of this application;
FIG. 6 is a schematic structural diagram of a voice call apparatus according to an embodiment of this application;
FIG. 7 is a schematic structural diagram of a voice call apparatus according to another embodiment of this application;
FIG. 8 is a schematic structural diagram of an electronic device according to an embodiment of this application; and
FIG. 9 is a schematic structural diagram of an electronic device according to another embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

The following describes in detail a voice call method provided in the embodiments of this application by using specific embodiments and application scenarios thereof with reference to the accompanying drawings.

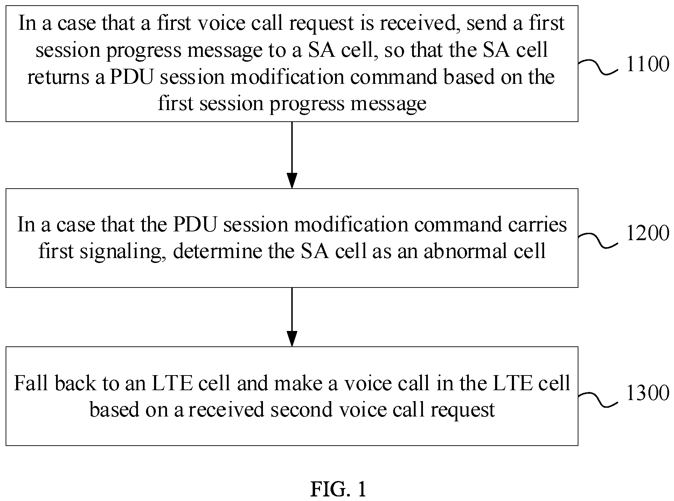

Refer to FIG. 1. FIG. 1 is a flowchart of a voice call method according to an embodiment of this application. The method may be applied to a first electronic device. The first electronic device may be a mobile phone, a tablet computer, a notebook computer, or the like. The first electronic device may be referred to as user equipment UE (User Equipment), and in the call scenario, the user equipment UE is a called party, that is, called UE. The first electronic device camps on a SA cell, and the SA cell is used for implementing a 5G voice service. The 5G voice service is mainly implemented through voice over new radio (voice over NR, VoNR). During specific implementation, in the process of registering to the SA cell, the called UE first accesses the SA cell and registers to a 5G core network (5G core network, 5GC). Then, the called UE may register to an IMS (IP Multimedia Subsystem) through a SA cell, so as to use a VoNR voice solution.

As shown in FIG. 1, the method may include steps 1100 to 1300, which will be described in detail below.

Step 1100: In a case that a first voice call request is received, send a first session progress message to the SA cell, so that the SA cell returns a PDU session modification command based on the first session progress message.

The first voice call request may be a voice call request sent by another electronic device, and the another electronic device, namely calling UE, may send the first voice call request (invite) to the first electronic device through a cell on which the another electronic device camps.

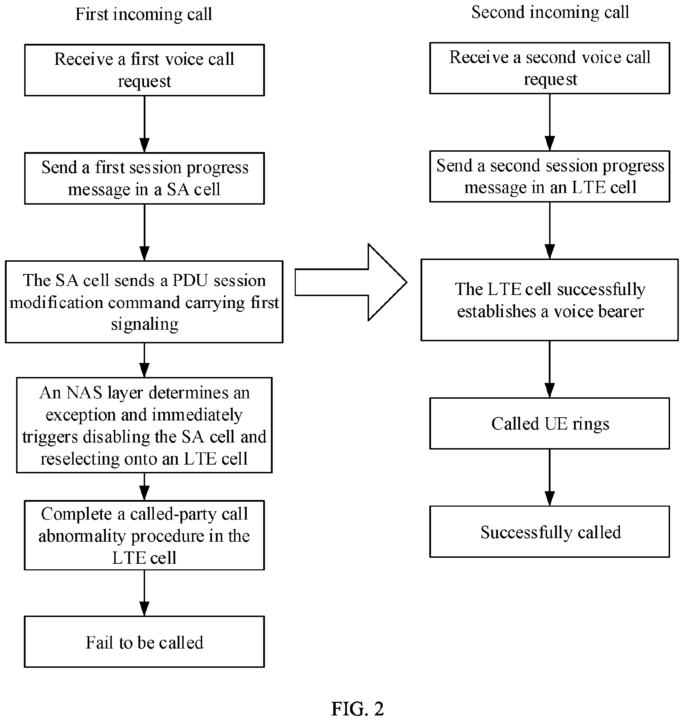

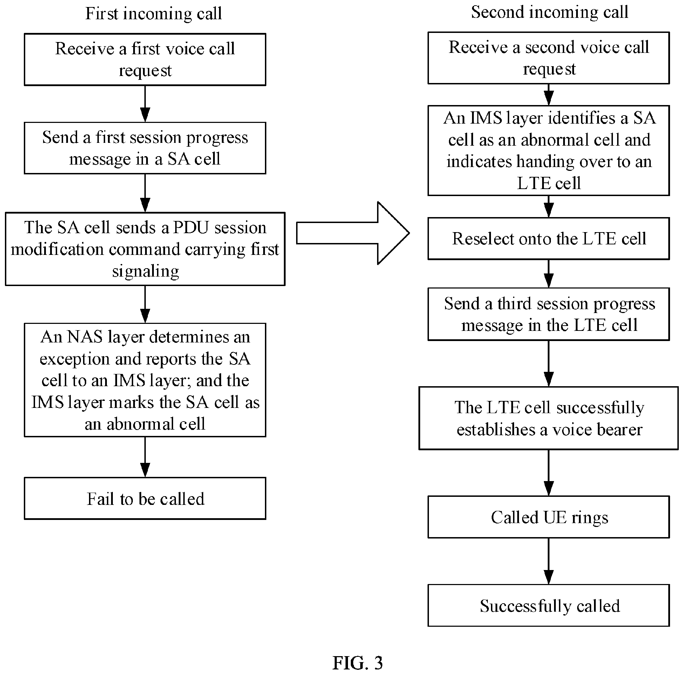

The first session progress message is (183 Session Progress message). In specific implementation, with reference to FIG. 2 and FIG. 3, in a case that the first voice call request (invite) is received, the first electronic device may send a first session progress message (183 Session Progress message) to the SA cell on which the another electronic device camps, so as to prompt a progress of session establishment.

The PDU session modification command (PDU session modification request) is a message returned by the SA cell to the first electronic device based on the received first session progress message. The PDU session modification command carries first signaling or second signaling. The first signaling is used to indicate the first electronic device to delete an unknown QoS flow (Delete existing QoS flow), and the second signaling is used to indicate the first electronic device to create a new QoS flow (Create new QoS flow).

In specific implementation, after receiving the session progress message, the 5G core network may normally indicate the SA cell to establish a media bearer for the first electronic device, namely the called UE; and also the SA cell may send a PDU session modification command. The PDU session modification command carries second signaling, and the second signaling is used to indicate the first electronic device to create a new QoS flow. It can be understood that the created new QoS flow has a unique ID, and uniquely corresponds to the first electronic device. However, because the SA cell is an abnormal cell, the PDU session modification command actually received by the first electronic device carries first signaling. The first signaling is used to indicate the first electronic device to delete an unknown QoS flow, that is, an ID of the deleted QoS flow is not of the first electronic device.

After execution of the step 1100 of sending the first session progress message to the SA cell in a case that the first voice call request is received, so that the SA cell returns a PDU session modification command based on the first session progress message, proceed to the following step.

Step 1200: In a case that the PDU session modification command carries first signaling, determine the SA cell as an abnormal cell.

In specific implementation, in a case that a PDU session modification command sent by the SA cell and received by the first electronic device carries the first signaling and that the first signaling is used to indicate the first electronic device to delete an unknown QoS flow, the SA cell may be considered as a cell in which a call cannot be made normally, that is, an abnormal cell.

After execution of the step 1200 of determining the SA cell as an abnormal cell, in a case that the PDU session modification command carries the first signaling, proceed to the following step.

Step 1300: Fall back to an LTE cell and make a voice call in the LTE cell based on a received second voice call request.

The second voice call request may be a voice call request sent by another electronic device, and the another electronic device, namely calling UE, may send the second voice call request (invite) to the first electronic device through a cell on which the another electronic device camps. It should be noted that the electronic device sending the first voice call request and the electronic device sending the second voice call request may be a same electronic device or different electronic devices.

In an example, the step 1300 of falling back to the LTE cell and making a voice call in the LTE cell based on the received second voice call request may further include the following steps 1310a to 1330a.

Step 1310a: Disable the SA cell and fall back from the SA cell to the LTE cell.

In the step 1310a, in a case that the SA cell is determined as an abnormal cell, the first electronic device may disable the SA cell within a first preset duration and fall back from the SA cell to the LTE cell. The first preset duration may be a value that is set according to an actual application scenario and actual requirement, and the first preset duration may be 12 minutes, which is not limited in this example.

In specific implementation, referring to FIG. 2, in a case that the SA cell is determined as an abnormal cell, the first electronic device immediately triggers through a NAS layer to disable the SA cell for 12 minutes and reselects onto the LTE cell, so as to fall back from the SA cell to the LTE cell.

After accessing the LTE cell, the first electronic device may complete a called-party call abnormality procedure in the LTE cell. For example, after accessing the LTE cell, the first electronic device may receive a call cancellation message sent by the LTE cell to end the abnormal called-party call. Alternatively, after accessing the LTE cell, the first electronic device may proactively initiate to end the call after a set time, for example, 6s, if no call cancellation message sent by the LTE cell is received.

Step 1320a: In a case that the second voice call request is received, send a second session progress message to the LTE cell, so that a media bearer is established in the LTE cell for the first electronic device based on the second session progress message.

In specific implementation, referring to FIG. 2, the first electronic device camps on the LTE cell. In a case that the second voice call request (invite) is received, the first electronic device sends a session progress message (183 Session Progress message) in the LTE cell, and the LTE cell establishes a voice bearer for the first electronic device to reserve media resources for the current call.

Step 1330a: Make a voice call based on the media bearer.

In specific implementation, the first electronic device may perform media negotiation coding and decoding in a case that a voice bearer is successfully established, the first electronic device rings, and the first electronic device is successfully called, so as to make a call normally.

According to this example, for the called UE, when the first incoming call is abnormal, the called UE immediately falls back to the LTE cell, so as to implement an improvement from 100% failing to make a call to enabling all calls starting from the second time to be normal. In addition, in this example, fallback to the LTE cell is immediately performed once a SA cell in which a call cannot be made is identified, or fallback to the LTE cell is performed only after the call in the SA cell is over; in this way, subsequent calls may be normal.

In an example, the step 1300 of falling back to the LTE cell and making a voice call in the LTE cell based on the received second voice call request may further include the following steps 1310b to 1340b.

Step 1310b: Add the SA cell to an abnormal cell list.

In specific implementation, referring to FIG. 3, in a case that the SA cell is determined as an abnormal cell, the first electronic device sends an indication to an IMS protocol stack through the NAS layer, and the IMS adds the SA cell to the abnormal cell list. Herein, because the media bearer cannot be established for the first electronic device, the SA cell sends a call cancellation message to end the call.

Step 1320b: In a case that the second voice call request is received and a cell on which the first electronic device camps is in the abnormal cell list, fall back from the SA cell to the LTE cell.

In specific implementation, referring to FIG. 3, the first electronic device continues to camp on the SA cell. In a case that the second voice call request (invite) is received and the cell on which the first electronic device camps is identified to belong to the abnormal cell list, the first electronic device considers that the call cannot be continued in the SA cell, and the IMS protocol stack sends an indication to the RRC layer to request fallback to the LTE cell. After receiving the indication from the IMS protocol stack, the RRC layer performs searching in an LTE network and reselects onto the LTE cell.

Step 1330b: Send a third session progress message to the LTE cell, so that a media bearer is established in the LTE cell for the first electronic device based on the third session progress message.

In specific implementation, referring to FIG. 3, after reselecting onto the LTE cell, the first electronic device sends a session progress message (183 Session Progress message) on the LTE cell, and the LTE cell establishes a voice bearer for the first electronic device to reserve media resources for the current call.

Step 1340b: Make a voice call based on the media bearer.

In specific implementation, referring to FIG. 3, the first electronic device may perform media negotiation coding and decoding in a case that a media bearer is successfully established, the first electronic device rings, and the first electronic device is successfully called, so as to make a call normally.

According to this example, for the called UE, when the first incoming call is abnormal, the called UE marks the abnormal cell, and then falls back to the LTE cell when the second incoming call is made, so as to implement an improvement from 100% failing to make a call to enabling all calls starting from the second time to be normal. In addition, in this example, fallback to the LTE cell is performed upon the second incoming call to make the call, or fallback to the LTE cell is performed upon the n-th incoming call, so as to implement that subsequent calls are normal.

In this embodiment of this application, the first electronic device sends a session progress message in the camped-on SA cell in a case that a first voice call request is received, so that the SA returns a PDU session modification command correspondingly. In a case that the PDU session modification command carries the first signaling, the first electronic device determines the SA cell as an abnormal cell and falls back to the LTE cell to make a voice call in the LTE cell based on a received second voice call request. That is, the first electronic device can identify a SA cell in which a call cannot be normally made, and fall back to an LTE cell, so that voice call can be made normally for a next incoming call and meet call requirements of users.

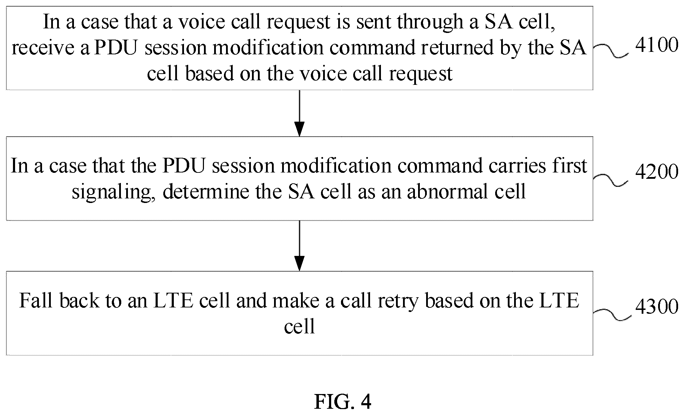

Refer to FIG. 4. FIG. 4 is a flowchart of another voice call method according to an embodiment of this application. The method may be applied to a second electronic device. The second electronic device may be a mobile phone, a tablet computer, a notebook computer, or the like. The second electronic device may be referred to as user equipment UE (User Equipment UE), and in the call scenario, the user equipment UE is a calling party, that is, calling UE. The second electronic device camps on a SA cell, and the SA cell is used for implementing a 5G voice service. The 5G voice service is mainly implemented through VoNR. During specific implementation, in the process of registering to the SA cell, the calling UE first accesses the SA cell and registers to 5GC. The calling UE may register to an IMS through a SA cell, so as to use a VoNR voice solution.

As shown in FIG. 4, the method may include steps 4100 to 4300, which will be described in detail below.

Step 4100: In a case that a voice call request is sent through the SA cell, receive a PDU session modification command returned by the SA cell based on the voice call request.

The second electronic device, that is, the calling UE, may send a voice call request (invite) to another electronic device through the SA cell on which the second electronic device camps.

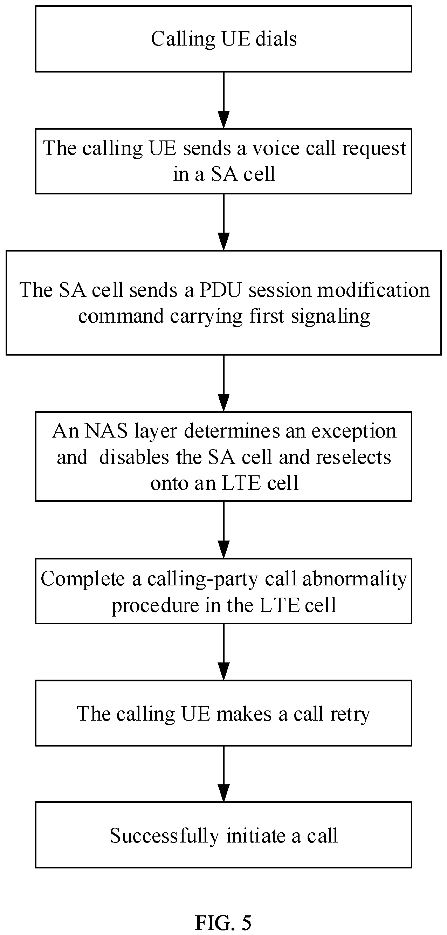

In this embodiment, referring to FIG. 5, the second electronic device, that is, the calling UE, dials, and the second electronic device sends a voice call request (invite) through the SA cell on which the second electronic device camps. After receiving the voice call request (invite), the 5G core network may indicate a 5G cell to establish a media bearer for the second electronic device, that is, the calling UE. In addition, the 5G base station needs to send a PDU session modification command (PDU session modification request), and the PDU session modification request needs to carry second signaling, where the second signaling is used to indicate the second electronic device to create a new QoS flow (Create new QoS flow). However, because the 5G cell is an abnormal cell, the PDU session modification command actually received by the second electronic device carries the first signaling, where the first signaling is used to indicate the second electronic device to delete an unknown QoS flow (Delete existing QoS flow).

After execution of the step 4100 of receiving a PDU session modification command returned by the SA cell based on the voice call request in a case that a voice call request is sent through the SA cell, proceed to the following step:

Step 4200: In a case that the PDU session modification command carries first signaling, determine the SA cell as an abnormal cell, where the first signaling is used to indicate the second electronic device to delete an unknown QoS flow.

In specific implementation, in a case that a PDU session modification command sent by the SA cell and received by the second electronic device carries the first signaling and that the first signaling is used to indicate the first electronic device to delete an unknown QoS flow, the SA cell may be considered as a cell in which a call cannot be made normally, that is, an abnormal cell.

After execution of the step 4200 of determining the SA cell as an abnormal cell, in a case that the PDU session modification command carries the first signaling, proceed to the following step.

Step 4300: Fall back to an LTE cell and make a call retry based on the LTE cell.

In this embodiment, the step 4300 of falling back to the LTE cell and making a call retry based on the LTE cell may further include the following steps 4310 to 4320:

Step 4310: Disable the SA cell within a first preset duration and fall back from the SA cell to the LTE cell.

The first preset duration may be a value that is set according to an actual application scenario and actual requirement, and the first preset duration may be 12 minutes, which is not limited in this example.

In specific implementation, referring to FIG. 5, in a case that the SA cell is determined as an abnormal cell, the second electronic device immediately triggers through the NAS layer to disable the SA cell for 12 minutes and reselect onto the LTE cell, so as to fall back from the SA cell to the LTE cell.

After accessing the LTE cell, the second electronic device may complete a calling-party call abnormality procedure in the LTE cell. For example, after accessing the LTE cell, the second electronic device may receive a call cancellation message sent by the LTE cell to end the abnormal calling-party call. Alternatively, after accessing the LTE cell, the second electronic device may proactively initiate to end the call after a set time, for example, 6s, if no call cancellation message sent by the LTE cell is received.

Step 4320: Initiate a call retry based on the LTE cell.

In specific implementation, referring to FIG. 5, when camping on the LTE cell, the second electronic device may dial again in the LTE cell to initiate a call retry. Here, the calling-party call is successful.

According to the above example, the calling UE immediately falls back to the LTE cell in a case that an outgoing call is abnormal, so as to implement an improvement from 100% call failures to 100% rapid successful calling.

According to this embodiment of this application, in a case that the second electronic device sends a voice call request through the SA cell on which the second electronic device camps, the SA cell may correspondingly return a PDU session modification command. In a case that the PDU session modification command carries the first signaling, the second electronic device determines the SA cell as an abnormal cell and falls back to the LTE cell to make a call retry. That is, the second electronic device can identify a SA cell in which a call cannot be normally made, and fall back to an LTE cell for a voice call, so as to improve a call success rate and meet call requirements of users.

It should be noted that the voice call apparatus provided in this embodiment of this application is capable of implementing the processes that are implemented by the method embodiments in FIG. 1. To avoid repetition, details are not described herein again.

It should be noted that the execution subject of the voice call method provided in this embodiment of this application may be a voice call apparatus. In the embodiments of this application, the voice call method being performed by the voice call apparatus is used as an example to describe the voice call apparatus provided in the embodiments of this application.

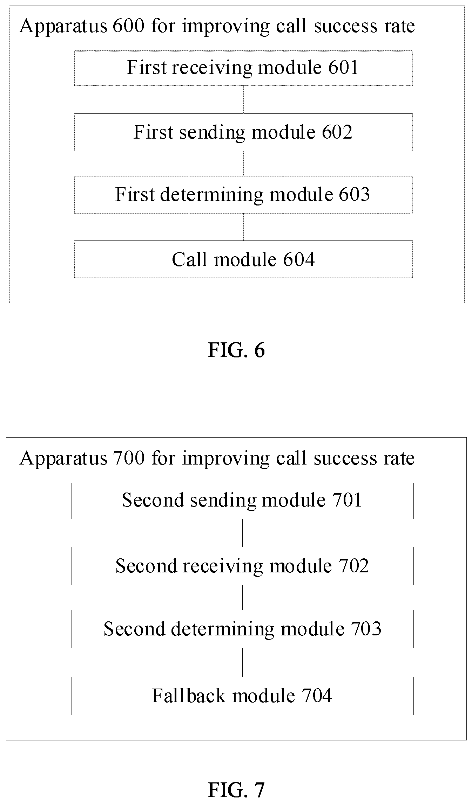

Referring to FIG. 6, an embodiment of this application further provides a voice call apparatus 600, applied to a first electronic device. The voice call apparatus 600 includes a first receiving module 601, a first sending module 602, a first determining module 603, and a call module 604.

The first receiving module 601 is configured to receive a first voice call request.

The first sending module 602 is configured to: send a first session progress message to the SA cell, so that the SA cell returns a PDU session modification command based on the first session progress message.

The first determining module 603 is configured to: in a case that the PDU session modification command carries first signaling, determine the SA cell as an abnormal cell, where the first signaling is used to indicate the first electronic device to delete an unknown QoS flow.

The call module 604 is configured to fall back to an LTE cell and make a voice call in the LTE cell based on a received second voice call request.

In an embodiment, the call module 604 is specifically configured to: disable the SA cell and fall back from the SA cell to the LTE cell; in a case of receiving the second voice call request, send a second session progress message to the LTE cell, so that a media bearer is established in the LTE cell for the first electronic device based on the second session progress message; and make a voice call based on the media bearer.

In an embodiment, the call module 604 is specifically configured to: add the SA cell to an abnormal cell list; in a case that the second voice call request is received and a cell on which the first electronic device camps is in the abnormal cell list, fall back from the SA cell to the LTE cell; send a third session progress message to the LTE cell, so that a media bearer is established in the LTE cell for the first electronic device based on the third session progress message; and make a voice call based on the media bearer.

In this embodiment of this application, the first electronic device sends a session progress message in the camped-on SA cell in a case that a first voice call request is received, so that the SA returns a PDU session modification command correspondingly. In a case that the PDU session modification command carries the first signaling, the first electronic device determines the SA cell as an abnormal cell and falls back to the LTE cell to make a voice call in the LTE cell based on a received second voice call request. That is, the first electronic device can identify a SA cell in which a call cannot be normally made, and fall back to an LTE cell, so that voice call can be made normally for a next incoming call and meet call requirements of users.

It should be noted that the voice call apparatus provided in this embodiment of this application is capable of implementing the processes that are implemented by the method embodiments in FIG. 4. To avoid repetition, details are not described herein again.

It should be noted that the execution subject of the voice call method provided in this embodiment of this application may be a voice call apparatus. In the embodiments of this application, the voice call method being performed by the voice call apparatus is used as an example to describe the voice call apparatus provided in the embodiments of this application.

Referring to FIG. 7, an embodiment of this application further provides a voice call apparatus 700, applied to a second electronic device. The voice call apparatus 700 includes a second sending module 701, a second receiving module 702, a second determining module 703, and a fallback module 704.

The second sending module 701 is configured to send a voice call request through the SA cell.

The second receiving module 702 is configured to receive a PDU session modification command returned by the SA cell based on the voice call request.

The second determining module 703 is configured to: in a case that the PDU session modification command carries first signaling, determine the SA cell as an abnormal cell, where the first signaling is used to indicate the second electronic device to delete an unknown QoS flow.

The fallback module 704 is configured to fall back to the LTE cell and make a call retry based on the LTE cell.

In an embodiment, the fallback module 704 is specifically configured to disable the SA cell within a first preset duration and fall back from the SA cell to the LTE cell; and initiate a call retry based on the LTE cell.

According to this embodiment of this application, in a case that the second electronic device sends a voice call request through the SA cell on which the second electronic device camps, the SA cell may correspondingly return a PDU session modification command. In a case that the PDU session modification command carries the first signaling, the second electronic device determines the SA cell as an abnormal cell and falls back to the LTE cell to make a call retry. That is, the second electronic device can identify a SA cell in which a call cannot be normally made, and fall back to an LTE cell for a voice call, so as to improve a call success rate and meet call requirements of users.

The voice call apparatus in this embodiment of this application may be an electronic device, or may be a component in the electronic device, such as an integrated circuit or a chip. The electronic device may be a terminal or other devices than the terminal. For example, the electronic device may be a mobile phone, a tablet computer, a notebook computer, a palmtop computer, an in-vehicle electronic device, a mobile Internet device (Mobile Internet Device, MID), an augmented reality (Augmented Reality, AR)/virtual reality (Virtual Reality, VR) device, a robot, a wearable device, an ultra-mobile personal computer (Ultra-Mobile Personal Computer, UMPC), a netbook, a personal digital assistant (Personal Digital Assistant, PDA), or the like; or may be a server, a network-attached storage (Network Attached Storage, NAS), a personal computer (Personal Computer, PC), a television (Television, TV), a teller machine, a self-service machine, or the like. This is not specifically limited in the embodiments of this application.

The voice call apparatus in this embodiment of this application may be an apparatus with an operating system. The operating system may be an Android (Android) operating system, an iOS operating system, or other possible operating systems, and is not specifically limited in the embodiments of this application.

The voice call apparatus provided in this embodiment of this application is capable of implementing the processes that are implemented by the method embodiments in FIG. 1 or FIG. 4. To avoid repetition, details are not described herein again.

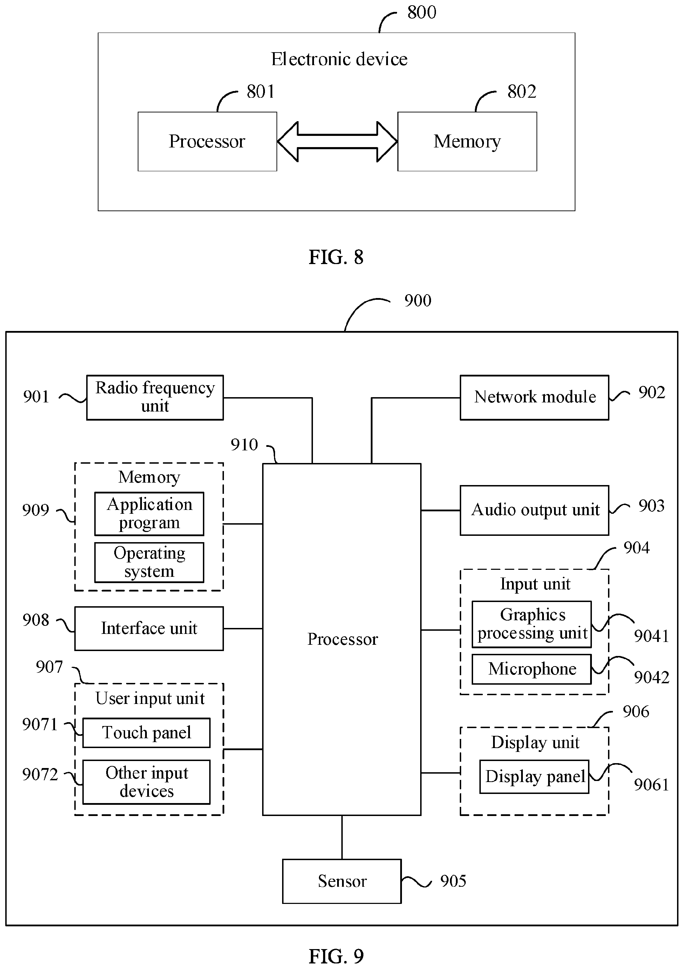

Optionally, as shown in FIG. 8, an embodiment of this application further provides an electronic device 800, including a processor 801, a memory 802, and a program or instructions stored in the memory 802 and capable of running on the processor 801. When the program or the instructions are executed by the processor 801, the processes of the foregoing embodiments of the voice call method are implemented, with the same technical effects achieved. To avoid repetition, details are not described herein again.

It should be noted that the electronic device in this embodiment of this application includes the aforementioned mobile electronic device and non-mobile electronic device.

FIG. 9 is a schematic diagram of a hardware structure of an electronic device according to an embodiment of this application.

The electronic device 900 includes but is not limited to components such as a radio frequency unit 901, a network module 902, an audio output unit 903, an input unit 904, a sensor 905, a display unit 906, a user input unit 907, an interface unit 908, a memory 909, a processor 910, and an image processing chip.

Persons skilled in the art can understand that the electronic device 900 may further include a power supply (for example, a battery) supplying power to all components, and the power supply may be logically connected to the processor 910 through a power management system. In this way, functions such as charge management, discharge management, and power consumption management are implemented by using the power management system. The structure of the electronic device shown in FIG. 9 does not constitute any limitation on the electronic device. The electronic device may include more or fewer components than shown in the figure, or a combination of some components, or the components disposed differently. Details are not repeated herein.

The processor 910 is configured to: in a case that a first voice call request is received, send a first session progress message to the SA cell, so that the SA cell returns a PDU session modification command based on the first session progress message; in a case that the PDU session modification command carries first signaling, determine the SA cell as an abnormal cell, where the first signaling is used to indicate the first electronic device to delete an unknown QoS flow; and fall back to an LTE cell and make a voice call in the LTE cell based on a received second voice call request.

In this embodiment of this application, the first electronic device sends a session progress message in the camped-on SA cell in a case that a first voice call request is received, so that the SA returns a PDU session modification command correspondingly. In a case that the PDU session modification command carries the first signaling, the first electronic device determines the SA cell as an abnormal cell and falls back to the LTE cell to make a voice call in the LTE cell based on a received second voice call request. That is, the first electronic device can identify a SA cell in which a call cannot be normally made, and fall back to an LTE cell, so that voice call can be made normally for a next incoming call and meet call requirements of users.

In an embodiment, the processor 910 is specifically configured to: disable the SA cell and fall back from the SA cell to the LTE cell; in a case of receiving the second voice call request, send a second session progress message to the LTE cell, so that a media bearer is established in the LTE cell for the first electronic device based on the second session progress message; and make a voice call based on the media bearer.

In an embodiment, the processor 910 is specifically configured to: add the SA cell to an abnormal cell list; in a case that the second voice call request is received and a cell on which the first electronic device camps is in the abnormal cell list, fall back from the SA cell to the LTE cell; send a third session progress message to the LTE cell, so that a media bearer is established in the LTE cell for the first electronic device based on the third session progress message; and make a voice call based on the media bearer.

It can be understood that in this embodiment of this application, the input unit 904 may include a graphics processing unit (Graphics Processing Unit, GPU) 9041 and a microphone 9042. The graphics processing unit 9041 processes image data of a still picture or video obtained by an image capture apparatus (such as a camera) in a video capture mode or an image capture mode. The display unit 906 may include a display panel 9061, and the display panel 9061 may be configured in a form of a liquid crystal display, an organic light-emitting diode, and the like. The user input unit 907 may include at least one of a touch panel 9071 and other input devices 9072. The touch panel 9071 is also referred to as a touchscreen. The touch panel 9071 may include two parts: a touch detection apparatus and a touch controller. The other input devices 9072 may include but are not limited to a physical keyboard, a function key (such as a volume control key or a power on/off key), a trackball, a mouse, a joystick, and the like. Details are not described herein.

The memory 909 may be configured to store software programs and various data. The memory 509 may include a first storage area for storing a program or instructions and a second storage area for storing data. The first storage area may store an operating system, an application program or instruction required by at least one function (for example, a sound playback function or an image playback function), and the like. In addition, the memory 909 may include a volatile memory or a non-volatile memory, or the memory 909 may include both a volatile memory and a non-volatile memory. The non-volatile memory may be a read-only memory (Read-Only Memory, ROM), a programmable read only memory (Programmable ROM, PROM), an erasable programmable read-only memory (Erasable PROM, EPROM), and an electrically erasable programmable read-only memory (Electrically EPROM, EEPROM), or flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 909 in the embodiments of this application includes but is not limited to these and any other suitable types of memories. The memory 909 may include a program storage area and a data storage area. The program storage area may store an operating system, and an application program required by at least one function (for example, a sound playback function or an image playback function). The data storage area may store data (for example, audio data or a phone book) created according to use of the mobile terminal. In addition, the memory 909 may include a high-speed random access memory, and may further include a non-volatile memory such as at least one disk storage device, a flash memory device, or another volatile solid-state storage device.

The processor 910 runs or executes a software program and/or module stored in the memory 909 and calls data stored in the memory 909. The processor 910 may include one or more processing units. Optionally, an application processor and a modem processor may be integrated in the processor 910. The application processor primarily processes operations involving an operating system, user interfaces, application programs, and the like. The modem processor primarily processes radio communication signals, for example, being a baseband processor. It can be understood that the modem processor may alternatively be not integrated in the processor 910.

An embodiment of this application further provides a readable storage medium, where a program or instructions are stored in the readable storage medium. When the program or the instructions are executed by a processor, the processes of the foregoing embodiment of the voice call method described above can be implemented, with the same technical effects achieved. To avoid repetition, details are not described herein again.

The processor is a processor in the electronic device described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or instructions to implement the processes of the foregoing voice call method embodiments, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application provides a computer program product, where the program product is stored in a storage medium, and the program product is executed by at least one processor to implement the processes of the foregoing voice call method embodiments, with the same technical effects achieved. To avoid repetition, details are not repeated herein.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A voice call method, applied to a first electronic device, wherein the first electronic device camps on a SA cell, and the method comprises:
in a case that a first voice call request is received, sending a first session progress message to the SA cell, so that the SA cell returns a PDU session modification command based on the first session progress message;
in a case that the PDU session modification command carries first signaling, determining the SA cell as an abnormal cell, wherein the first signaling is used to indicate the first electronic device to delete an unknown QoS flow; and
falling back to an LTE cell and making a voice call in the LTE cell based on a received second voice call request.

2. The method according to claim 1, wherein the falling back to an LTE cell and making a voice call in the LTE cell based on a received second voice call request comprises:
disabling the SA cell and falling back from the SA cell to the LTE cell;
in a case that the second voice call request is received, sending a second session progress message to the LTE cell, so that a media bearer is established in the LTE cell for the first electronic device based on the second session progress message; and
making a voice call based on the media bearer.

3. The method according to claim 1, wherein the falling back to an LTE cell and making a voice call in the LTE cell based on a received second voice call request comprises:
adding the SA cell to an abnormal cell list;
in a case that the second voice call request is received and a cell on which the first electronic device camps is in the abnormal cell list, falling back from the SA cell to the LTE cell;
sending a third session progress message to the LTE cell, so that a media bearer is established in the LTE cell for the first electronic device based on the third session progress message; and
making a voice call based on the media bearer.

4. A voice call method, applied to a second electronic device, wherein the second electronic device camps on a SA cell, and the method comprises:
in a case that a voice call request is sent through the SA cell, receiving a PDU session modification command returned by the SA cell based on the voice call request;
in a case that the PDU session modification command carries first signaling, determining the SA cell as an abnormal cell, wherein the first signaling is used to indicate the second electronic device to delete an unknown QoS flow; and
falling back to an LTE cell and making a call retry based on the LTE cell.

5. The method according to claim 4, wherein the falling back to an LTE cell and making a call retry based on the LTE cell comprises:
disabling the SA cell within a first preset duration and falling back from the SA cell to the LTE cell; and
initiating a call retry based on the LTE cell.

6. A voice call apparatus, applied to a first electronic device, wherein the first electronic device camps on a SA cell, and the apparatus comprises:
a first receiving module, configured to receive a first voice call request;
a first sending module, configured to: send a first session progress message to the SA cell, so that the SA cell returns a PDU session modification command based on the first session progress message;
a first determining module, configured to: in a case that the PDU session modification command carries first signaling, determine the SA cell as an abnormal cell, wherein the first signaling is used to indicate the first electronic device to delete an unknown QoS flow; and
a call module, configured to fall back to an LTE cell and make a voice call in the LTE cell based on a received second voice call request.

7. The apparatus according to claim 6, wherein the call module is specifically configured to:
disable the SA cell and fall back from the SA cell to the LTE cell;
in a case that the second voice call request is received, send a second session progress message to the LTE cell, so that a media bearer is established in the LTE cell for the first electronic device based on the second session progress message; and
make a voice call based on the media bearer.

8. The apparatus according to claim 6, wherein the call module is specifically configured to:
add the SA cell to an abnormal cell list;
in a case that the second voice call request is received and a cell on which the first electronic device camps is in the abnormal cell list, fall back from the SA cell to the LTE cell;
send a third session progress message to the LTE cell, so that a media bearer is established in the LTE cell for the first electronic device based on the third session progress message; and
make a voice call based on the media bearer.

9. A voice call apparatus, applied to a second electronic device, wherein the second electronic device camps on a SA cell, and the apparatus comprises:
a second sending module, configured to send a voice call request through the SA cell;
a second receiving module, configured to receive a PDU session modification command returned by the SA cell based on the voice call request;
a second determining module, configured to: in a case that the PDU session modification command carries first signaling, determine the SA cell as an abnormal cell, wherein the first signaling is used to indicate the second electronic device to delete an unknown QoS flow; and
a fallback module, configured to fall back to the LTE cell and make a call retry based on the LTE cell.

10. The apparatus according to claim 9, wherein the fallback module is specifically configured to:
disable the SA cell within a first preset duration and fall back from the SA cell to the LTE cell; and
initiate a call retry based on the LTE cell.

11. An electronic device, comprising a processor and a memory, and the memory stores a program or instructions capable of running on the processor, wherein when the program or the instructions are executed by the processor, the steps of the voice call method according to any one of claims 1 to 5 are implemented.

12. A readable storage medium, wherein the readable storage medium stores a program or instructions, and when the program or the instructions are executed by a processor, the steps of the voice call method according to any one of claims 1 to 5 are implemented.

13. An electronic device, wherein the electronic device is configured to perform the voice call method according to any one of claims 1 to 5.

14. A chip, comprising a processor and a communication interface, wherein the communication interface is coupled to the processor, and the processor is configured to execute a program or instructions to implement the steps of the voice call method according to any one of claims 1 to 5.

15. A computer program product, wherein the computer program product is stored in a non-transitory storage medium, and the computer program product is executed by at least one processor to implement the steps of the voice call method according to any one of claims 1 to 5.
